# NEUE EUROPÄISCHE PATENTSCHRIFT

(11) **EP 0 822 027 B2**
(45) Veröffentlichungstag und Bekanntmachung des Hinweises auf die Entscheidung über den Einspruch: **15.11.2006**
(45) Hinweis auf die Patenterteilung: 07.05.2003
(21) Anmeldenummer: 96112574.7
(22) Anmeldetag: 03.08.1996
(51) Int. Cl.: B23K 26/00, B23K 26/08

(54) **Verfahren zum Härten von Werkstückoberflächen mittels Strahlen, insbesondere mittels Laserstrahlen, und Vorrichtung zur Durchführung des Verfahrens**
Method of hardening the surface of a workpiece using a beam, particularly a laser beam and device for executing this method
Procédé de durcissement de la surface d'une pièce à travailler au moyen d'un faisceau, en particulier un faisceau laser et dispositif de réalisation de ce procédé

(43) Veröffentlichungstag der Anmeldung: 04.02.1998
(73) Patentinhaber: INPRO Innovationsgesellschaft für fortgeschrittene Produktionssysteme in der Fahrzeugindustrie mbH, 10587 Berlin (DE)
(72) Erfinder: Wahl, Roland, Dr. c/o INPRO.. GmbH, D-10587 Berlin (DE); Brandl, Toni c/o INPRO .. GmbH, D-10587 Berlin (DE); Anders, Michael,Dr. c/o INPRO.. GmbH, D-10587 Berlin (DE)
(74) Vertreter: Hoffmann, Klaus-Dieter

(56) Entgegenhaltungen:
- DE-A- 3 731 136
- DE-A- 3 739 862
- DE-A- 4 126 351
- DE-C- 3 905 551
- US-A- 4 539 461
- US-A- 5 196 672
- US-A- 5 500 502
- H.W Bieler u.a "Methods of adaptative control in surface processing with laser radiation".DVS-Bericht-Band 113 , 1988 , DVS-Verlag Düsseldorf, Seiten 46-53
- H.W. Bergmann, E. Geissler, "Laserhärten von Stählen", Carl Hanser Verlag, München 1994, Seiten 91-96
- A.Drenker u.a, "Adaptive temperature control in laser transformation hardening" ECLART'90, Seiten 283-289
- Broschüre Sonderschau "Laser", Metav 90, Seiten 3,4,104-107,120

## Beschreibung

Die Erfindung betrifft ein Verfahren zum Härten von Werkstückoberflächen mittels Strahlen, insbesondere mittels Laserstrahlen, gemäß dem Oberbegriff der Patentansprüche 1 und 3.

Weiterhin betrifft die Erfindung eine Vorrichtung gemäß dem Oberbegriff des Patentanspruchs 5 zur Durchführung des Verfahrens.

Die Kontrolle und Regelung der Werkstückoberflächentemperatur beim Strahlhärten wie z.B. dem Laserstrahlhärten ist eine notwendige Voraussetzung zur Optimierung des Arbeitsprozesses. Durch Einhalten einer angepaßten, in der Regel homogenen und geringfügig unterhalb der Schmelztemperatur liegenden Verteilung der Werkstückoberflächentemperatur längs und quer zur Vorschubrichtung werden vorgegebene Härtespurbreiten mit gleichmäßigen Spurtiefen bei höchstmöglicher Vorschubgeschwindigkeit erreicht. Gleichzeitig verhindert eine solche Regelung die Beschädigung der Oberfläche durch Anschmelzungen, was Nacharbeits- und Ausschußkosten senkt.

Nach der DE 41 26 351 A1 ist ein Verfahren zum Bearbeiten von Werkstückoberflächen mit Laserstrahlung beim Umwandlungshärten bekannt, bei dem im Strahlquerschnitt geformte Laserstrahlung fokussiert, mit bahngesteuerten Spiegeln über den Bearbeitungsbereich des Werkstücks bewegt und die mittlere Temperatur des Strahlflecks im Bearbeitungsbereich des Werkstücks unter Verwendung einer optischen Auskoppeleinrichtung für die emittierte Strahlung, die in Richtung letzterer hinter den bahngesteuerten Spiegeln angeordnet ist, ortsaufgelöst in Abstimmung auf die zeitliche Bewegung des Strahlflecks über den Bearbeitungsbereich von einer Meßeinrichtung erfaßt wird, die der optischen Auskoppeleinrichtung nachgeordnet und an einen Regler gekoppelt ist. Die Meßeinrichtung stellt eine Regelgröße zur Verfügung, die im Regler mit einer als Sollwert vorgegebenen Führungsgröße verglichen wird, so daß der Differenz entsprechend die vom Laser erzeugte Laserstrahlung gesteuert werden kann.

Bekannt ist auch eine Werksstückbearbeitungsvorrichtung, insbesondere zum Oberflächenhärten von Werkstücken (DE 37 39 862 A1), bei der im Strahlengang eines Lasers ein Umlenkspiegel vorgesehen ist, der die Laserstrahlung zum Werkstück hin ablenkt und mit einer für die vom Werkstück abgegebene Wärmestrahlung durchlässigen Reflexionsschicht versehen ist. Im Strahlengang der vom Umlenkspiegel durchgelassenen Wärmestrahlung des erhitzten Werkstücks ist ein Strahlungsdetektor angeordnet, der ein von der Stärke der erfaßten durchgelassenen Wärmestrahlung abhängiges Ausgangssignal zur Leistungsregelung des Lasers liefert.

Bekannt ist weiterhin, bei der Präzisionsbearbeitung von Werkstückoberflächen mit Festkörperlasern zur Erfassung der Werkstückoberflächentemperatur Pyrometer einzusetzen (vgl. z.B. "Präzisionsbearbeitung mit Festkörperlasern" in "Laser in der Materialbearbeitung", Band 4, 1995, Herausgeber: VDI-Technologiezentrum; Physikalische Technologie). Zur Erfassung der Oberflächentemperatur werden üblicherweise dem Werkstück zugewandte pyrometrische Detektoren zusätzlich zu der laserstrahlformenden Härteoptik montiert und gemeinsam mit dieser in der Vorschubbewegung über das Werkstück verfahren. Sie ermitteln die durchschnittliche Temperatur in ihrem Meßfleck. Der heißeste Ort während des Härtungsvorgangs ist aber der jeweils momentane Auftreffort des Laserstrahlflecks, der aufgrund der strahlformenden Ablenkeinrichtungen quer zur Vorschubrichtung oszilliert, sich somit permanent ändert und dessen Temperatur daher auf diese Weise nur unzureichend erfaßt werden kann.

Zur Erreichung möglichst homogener Werkstückoberflächentemperaturen quer zur Vorschubrichtung werden bei der genannten Präzisionsbearbeitung nicht der aktuellen Temperaturverteilung angepaßte, sondern konstante Strahlenergieverteilungen mittels fest eingestellter Strahlablenkungsformen erzeugt. Dieses Verfahren liefert jedoch nur bei homogenen Werkstück- und Werkstückoberflächeneigenschaften sowie konstanten Verfahrensrandbedingungen zufriedenstellende Ergebnisse. In Vorschubrichtung wird der Mittelwert der Strahlenergieverteilung auf Basis der gemessenen mittleren Temperatur im Pyrometermeßfleck geregelt.

Für verschiedene Bearbeitungsverfahren von Werkstückoberflächen ist deren definierte Erwärmung gefordert. So wird beim Verfahren zum Strahlhärten von Werkstückoberflächen die Energie eines Strahls derart geformt, daß sie in bestimmter Form (geometrische Ausdehnung und Verteilung) auf die Werkstückoberfläche auftrifft. Der Strahl wird abgelenkt und führt dadurch eine Bewegung auf der Werkstückoberfläche aus. Ziel der Erfindung ist es hierbei, den momentanen Auftreffpunkt des Strahls auf der Werkstückoberfläche zu beobachten und die momentane Temperatur im Auftreffpunkt zu messen. Ein mit der Temperaturmessung gekoppelter Regler generiert unter Verwendung verschiedener Sollgrößen und Istgrößen bestimmte Stellgrößen, so daß sich der geforderte Temperaturverlauf an den Auftrefforten des abgelenkten Strahls ergibt, wobei durch einen Aktor eine Relativbewegung zwischen der Werkstückoberfläche und dem Werkzeug (Härteoptik) erzeugt wird, so daß große Flächen bestrahlt werden können. Die im Regler enthaltenen Regelkreise haben dabei für die Einhaltung der geforderten Temperaturen, die sich aus bearbeitungsspezifischen Vorgaben bestimmen lassen, in jedem einzelnen Auftreffort des Strahls und der Werkstückoberfläche zu sorgen.

Der Erfindung liegt die Aufgabe zugrunde, ein Verfahren und eine Vorrichtung zu seiner Durchführung gemäß der eingangs erwähnten Art zur Verfügung zu stellen, mit dem bzw. der eine in optimaler Weise geregelte Verteilung der Werkstückoberflächentemperatur längs und quer zur Vorschubrichtung zur Erzeugung gleichbleibender Härtungsspuren mit gewünschter Geometrie bei relativ kurzer Bearbeitungszeit auch bei inhomogenen Werkstückoberflächen möglich ist.

Diese Aufgabe wird erfindungsgemäß gelöst durch die Kombination der Merkmale nach Patentanspruch 1.

Bekannte Abschnitte fehlender Werkstückoberflächen (Bohrungen oder Kanten am Werkstück) werden bevorzugt mit hoher Ablenkgeschwindigkeit übersprungen.

Die genannte Aufgabe wird erfindungsgemäß auch durch die Kombination der Merkmale nach Patentanspruch 3 gelöst.

In Vorschubrichtung wird die Temperatur der heißesten Stelle der vom Laser bestrahlten Werkstückoberflächenlinie zur Regelung des Laserniveaus aufgrund der ortsaufgelösten Temperaturmessung quer zur Vorschubrichtung genutzt.

Erfolgen Strahlablenkung und Vorschubbewegung gemäß dem Idealfall so, daß die Strahlquelle immer an ihrer Leistungsgrenze gehalten wird, ergibt sich eine relativ kurze Bearbeitungszeit. Wird während der Strahlablenkung die geforderte Temperatur schon bei niedrigen Strahlleistungen erreicht, kann die Vorschubgeschwindigkeit bis an die Strahlleistungsgrenze erhöht werden.

Die erfindungsgemäße Vorrichtung zur Durchführung des erfindungsgemäßen Verfahrens zeichnet sich durch die Kombination der Merkmale nach Patentanspruch 5 aus.

Vorzugsweise weist die Temperaturkontrolleinrichtung einen dem teildurchlässigen Spiegel der Härteoptik in Richtung des Verlaufs der Temperaturstrahlung nachgeordneten Umlenkspiegel auf, von dem die Temperaturstrahlung durch eine Reihenanordnung eines Bandpaßfilters, einer Blende und einer Linse lenkbar ist, von der die Temperaturstrahlung auf eine nachgeordnete Lochblende fokussierbar ist, der ein IR-Detektor in Strahlrichtung nachgeordnet ist, von dem stets die Temperatur im Auftreffort des quer zur Vorschubrichtung oszillierenden Arbeitslaserstrahlffecks exakt meßbar ist.

Die Ablenkeinrichtung der Härteoptik kann ein Scanner- oder Schwingspiegel sein.

Da gemäß der Erfindung dafür gesorgt wird, daß die gemessene Temperaturstrahlung der Werkstückoberfläche denselben Strahlweg wie der Leistungsstrahl inklusive aller den Arbeitsstrahl formender Ablenkspiegel durchläuft, wird erreicht, daß stets exakt die Temperatur am Auftreffort des Laserstrahlflecks gemessen wird. Durch die Ablenkbewegung der Strahlformungseinrichtungen für den Laserstrahl wird somit die Verteilung der maximalen Werkstückoberflächentemperaturen quer zur Vorschubrichtung erhalten. Durch die sich anschließende verhältnismäßig schnelle Meßdatenverarbeitung ist es möglich, aus der gemessenen Temperaturverteilung mittels geeigneter Algorithmen eine darauf abgestimmte Verteilung der Laserstrahlenergie zu erzeugen, die für die gewünschte homogene Temperaturverteilung sorgt. Als Stellgrößen hierzu werden die Bewegungsformen der zur Strahlformung eingesetzten beweglichen Strahlablenkspiegel genutzt, bei einem hinreichend schnell steuerbaren Laser auch der zeitliche Verlauf der Laserleistung.

Als besondere Vorteile der Erfindung erweisen sich:
- durch ortsaufgelöste Temperaturmessung und angepaßte Regelstrategie die Erzeugung gleichbleibender Härtungsspuren mit gewünschter Geometrie in relativ kurzer Bearbeitungszeit auch bei inhomogenen Werkstückoberflächen, die verhältnismäßig groß sein können;
- die mögliche Einhaltung gewünschter Werkstückoberflächentemperaturen auch bei Schwankung beeinflussender Verfahrensrandbedingungen, wie z.B. der Eigenwärme der Werkstücke;
- die Nutzung des selben Strahlwegs für Meßstrahlung und Laserleistungsstrahlung, wodurch eine exakte Temperaturmessung am momentanen Laserstrahlauftreffort (heißeste Stelle) ohne großen apparativen Aufwand ermöglicht ist;
- eine unbeeinträchtigte Zugänglichkeit zu den Werkstücken, da keine dem Werkstück zugewandten, zusätzlichen Komponenten benötigt werden; und
- die Verwendung für das Härten benötigter Stellglieder zur Temperaturregelung (Laserleistungssteuerung und programmierbare Strahlablenksysteme).

Die Erfindung wird nun anhand der Zeichnungen erläutert. In diesen sind:
- **Fig. 1**: eine prinzipielle blockschaltbildartige Darstellung der erfindungsgemäßen Vorrichtung zur Durchführung des erfindungsgemäßen Verfahrens,
- **Fig. 2**: ein Diagramm, das bei einer Regelung der Strahlenergieverteilung quer zur Bearbeitungsrichtung durch Scannerbeeinflussung den gemessenen Temperaturverlauf über die Spurbreite zeigt,
- **Fig. 3**: ein Diagramm, das für das in Fig. 1 gezeigte Beispiel eine vom Regler zum Ausgleich generierte Scannerbahn zeigt,
- **Fig. 4**: ein Diagramm, in dem die Temperatur über die Spurlänge in Bearbeitungsrichtung aufgetragen und die Regelung der Energie in Vorschubrichtung erkennbar ist,
- **Fig. 5**: ein Diagramm, aus dem die ortsaufgelöste Temperaturmessung während des Härtens mit temperaturgeregelter Scannerbewegung hervorgeht,
- **Fig. 6**: ein Diagramm, aus dem die ortsaufgelöste Temperaturmessung während des Härtens mit sinusförmiger Scannerbewegung ohne Reglereinsatz hervorgeht,
- **Fig. 7**: eine schematische Darstellung, aus der ein allmähliches Erreichen der geplanten Spurtiefe ohne Temperaturregelung hervorgeht und
- **Fig. 8**: eine schematische Darstellung, aus der ein schnelles Erreichen der geplanten Spurtiefe bei Temperaturregelung hervorgeht.

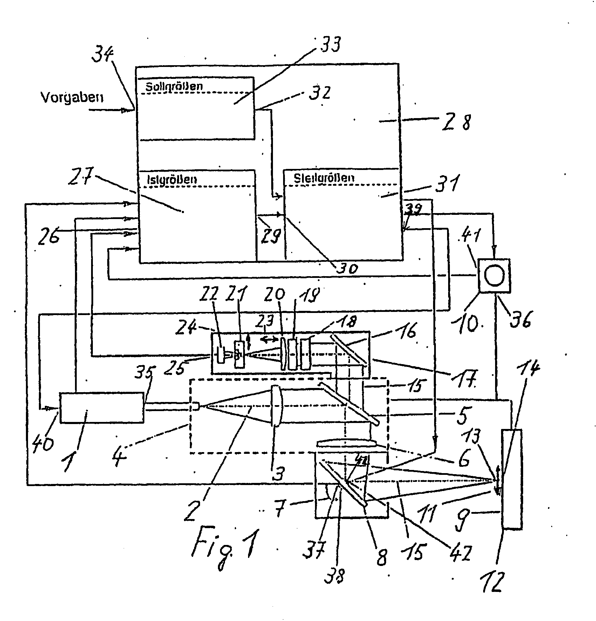

Wie aus Fig. 1 hervorgeht, die ein Prinzipbild der Vorrichtung zur Regelung der Werkstückoberflächentemperatur zeigt, wird der von einer Strahlquelle 1, z.B. einem Festkörperlaser kommende Leistungsstrahl 2 einer laserstrahlformenden Härteoptik 4 zugeführt, in der er von einer Linse 3 auf einen teildurchlässigen Umlenkspiegel 5 gelenkt und nach Umlenkung um 90° durch letzteren über eine weitere Linse 6 auf einen hinsichtlich seiner Ablenkgeschwindigkeit (Pfeil 7) steuerbaren Schwingspiegel 8 gerichtet wird, von dem er auf die Oberfläche 9 eines von einem Antriebsmotor 10 bewegbaren (siehe Doppelpfeil 11) Werkstücks 12 derart zum Härten des letzteren zu einem Strahlfleck 13 fokussiert wird, daß der Auftreffort 14 des Arbeitslaserstrahlflecks 13 während des Härtens durch die Ablenkbewegung des Schwingspiegels 8 quer zur Vorschubrichtung 11 des Werkstücks 12 oszilliert.

Die unmittelbar vom jeweiligen Auftreffort 14 des Arbeitslaserstrahlflecks 13 kommende Temperaturstrahlung 15 wird kolinear zum Strahlgang 2 des Arbeitslasers 1 durch die Härteoptik 4 hindurchgeführt, d.h. sie verläuft, wie aus Fig. 1 ersichtlich; vom Auftreffort 14 des Arbeitslaserstrahlflecks 13 zum Schwingspiegel 8 und von diesem über die Linse 6 zu dem teildurchlässigen Spiegel 5 der Härteoptik 4, durch den sie hindurchtritt und auf einen Umlenkspiegel 16 einer Temperaturkontrolleinrichtung 17 gelangt, von dem die Temperaturstrahlung nach Umlenkung um 90° in der Temperaturkontrolleinrichtung 17 durch eine Anordnung aus einem BandpaBfilter 18, einer Blende 19 und einer Linse 20 gelenkt und von letzterer auf eine Lochblende 21 fokussiert wird, der in Strahlrichtung ein IR-Detektor 22 nachgeordnet ist. Die Linse 20 und die Lochblende 21 sind, wie aus den Doppelpfeilen 23 bzw. 24 ersichtlich ist, in Strahlrichtung bzw. senkrecht zu dieser hin- und herbeweglich. Von dem IR-Detektor 22 wird stets exakt die Temperatur in jedem Auftreffpunkt 14 des Arbeitslaserstrahlflecks unmittelbar gemessen.

Mit dem IR-Detektor 22 und damit mit dem Ausgang 25 der Temperaturkontrolleinrichtung 17 ist ein Eingang 26 eines Istgrößen verarbeitenden Regelkreises 27 eines Reglers 28 verbunden, dessen Ausgang 29 wiederum mit dem Eingang 30 eines StellgröBen erzeugenden Regelkreises 31 des Reglers 28 verbunden. Der Eingang 30 des Regelkreises 31 ist weiterhin mit dem Ausgang 32 eines weiteren Sollgrößen verarbeitenden Regelkreises 33 des Reglers 28 verbunden, in dessen Eingang 34 bearbeitungsspezifische Vorgaben als Bearbeitungsparameter eingebbar sind.

Der Eingang 26 des Regelkreises 27 des Reglers 28 ist weiterhin mit dem Ausgang 35 der Strahlquelle 1, dem Ausgang 36 des die Vorschubbewegung erzeugenden Antriebsmotors 10 und dem Ausgang 37 eines Antriebs 38 des hinsichtlich seiner Ablenkgeschwindigkeit steuerbaren Schwingspiegels 8 zur Aufnahme der Ist-Strahlleistung bzw. der Ist-Vorschubbewegung bzw. der Ist-Strahlablenkung verbunden.

Dem Eingang 34 des Sollgrößen verarbeitenden Regelkreises 33 des Reglers 28 werden als bearbeitungsspezifische Vorgaben, aus der sich die geforderten Temperaturen bestimmen lassen, z.B. Materialeigenschaften, die Einhärttiefe, die Erwärmungs- und Abkühlungsdauer, die Werkstückgeometrie, die Ausl-enkbewegung, die Vorschubbewegung und die Bearbeitungszeit eingegeben.

Der Ausgang 39 des Regelkreises 31 des Reglers 28, in dem aus den über den Eingang 30 eingegebenen Istgrößen und Sollgrößen nach deren Abgleich die erforderlichen Stellgrößen erzeugt werden, ist mit dem Eingang 40 der Strahlquelle 1, dem Eingang 41 des Antriebsmotors 10 und dem Eingang 42 des Antriebs 38 des Schwingspiegels 8 zur Steuerung einer an den geforderten homogenen Temperaturverlauf angepaßten Verteilung der Laserstrahlenergie bzw. angepaßten Vorschubbewegung bzw. angepaßten Strahlablenkung verbunden.

Über eine verhältnismäßig schnelle Meßdatenverarbeitung der stets in den Auftrefforten 14 des Arbeitslaserstrahlflecks 13 momentan exakt gemessenen Temperaturen ist somit eine optimale Erreichung homogener Werkstückoberflächentemperaturen längs und quer zur Vorschubrichtung 11 auf einfache Weise möglich.

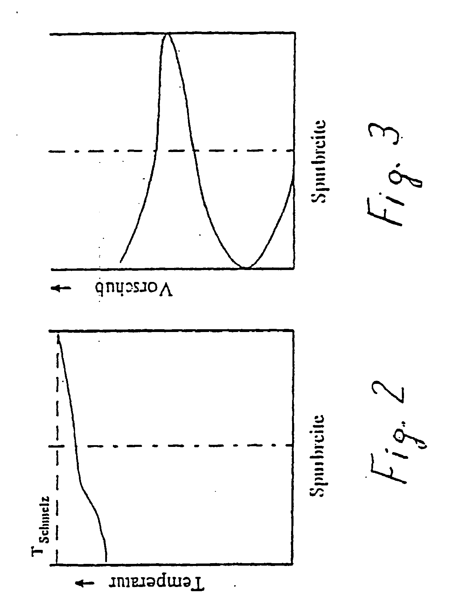

Die Fig. 2 und 3 stehen im Zusammenhang mit einer Teilstrategie zur Verfahrensoptimierung, bei der die Regelung der Strahlenergieverteilung quer zur Bearbeitungsrichtung durch Scannerbeeinflussung erfolgt, wobei auch eine geregelte Oberflächentemperaturverteilung bei inhomogenen Werkstückeigenschaften wie z.B. lokalen Verzunderungen, Bohrlöcher und die Annäherung an Kanten angestrebt wird. Wie Fig. 2 zeigt, aus der die gemessene Temperaturverteilung über die Spurbreite hervorgeht, ist die Temperatur im Diagramm rechts oben schon fast zu heiß, da sie an die Schmelztemperatur T_{schmelz} herankommt.

Das Diagramm gemäß Fig. 3 zeigt die vom Regler in diesem Fall zum Ausgleich generierte Scannerbahn, wobei eine schnellere Durchfahrt der rechten Spurseite zu erkennen ist.

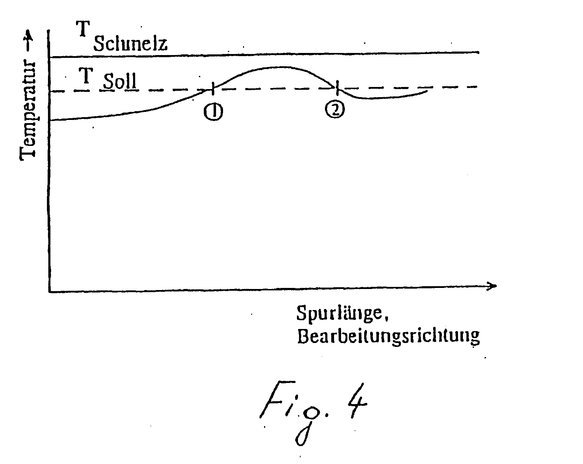

Das Diagramm gemäß Fig. 4, in dem die Temperatur über die Spurlänge aufgetragen ist, steht im Zusammenhang mit einer weiteren Teilstrategie zur Verfahrensoptimierung, bei der eine Regelung der Energie in Vorschubrichtung (Streckenenergie) erfolgt. Der Temperaturverlauf zeigt, daß bei Punkt 1 eine Absenkung der Laserleistung P_{L} und bei Punkt 2 eine Erhöhung der Laserleistung P_{L} durch die Regelung der Streckenenergie in Vorschubrichtung erfolgt. Eine derartige Vorgehensweise läßt sich prinzipiell auch mit handelsüblichen, örtlich weniger gut aufgelöst messenden Pyrometern aufbauen, wobei jedoch nur eine mittlere Temperatur über der Bearbeitungszone als Signal genutzt werden kann. Da erfindungsgemäß jedoch quer zur Vorschubrichtung aufgelöst und äußerst schnell gemessen werden kann, erweist sich das erfindungsgemäße Verfahren auch bei dieser Teilstrategie noch präziser, und es kann z.B. die. Temperatur der tatsächlich heißesten Einzelstelle als Signal genutzt werden.

Eine dritte Teilstrategie zur Verfahrensoptimierung basiert auf dem geregelten Anfahren der Arbeitsbewegung, d.h. erfindungsgemäß auf der temperaturgeregelten Festlegung des Anfahrzeitpunktes. Diese Vorgehensweise, die sich jederzeit aus der Regelung der Strahlenergieverteilung quer zur Bearbeitungsrichtung durch Scannerbeeinflussung und der Regelung der Energie in Vorschubrichtung durch Koppelung des Reglers mit dem Antriebsmotor für die Vorschubbewegung herstellen läßt, ist ebenfalls äußerst präzise durchführbar.

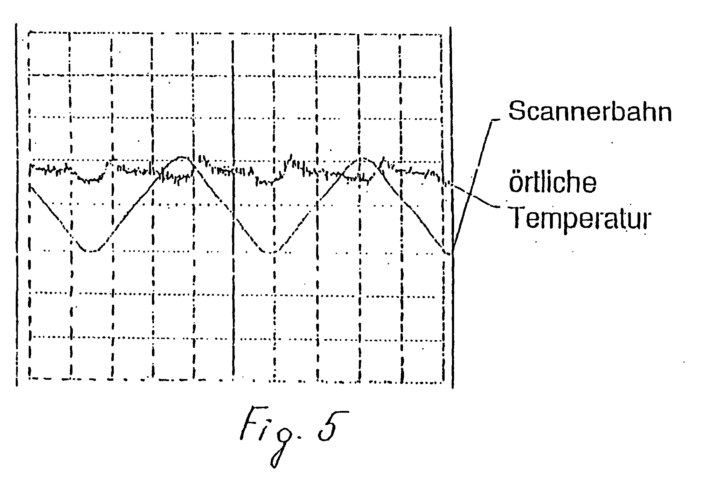

Aus dem Diagramm gemäß Fig. 5 geht die ortsaufgelöste Temperaturmessung während des Härtens mit temperaturgeregelter Scannerbewegung hervor, wobei der Regler die Scannerbewegung so anpaßt, daß wunschgemäß, wie Fig. 5 zeigt, überall gleich hohe Temperaturen entstehen.

Die Parameter sind in diesem Fall wie folgt:
P = 2500 W
V = 0,7 m/min
Strahldurchmesser: 6,1 mm
Scanbreite: 14,6 mm

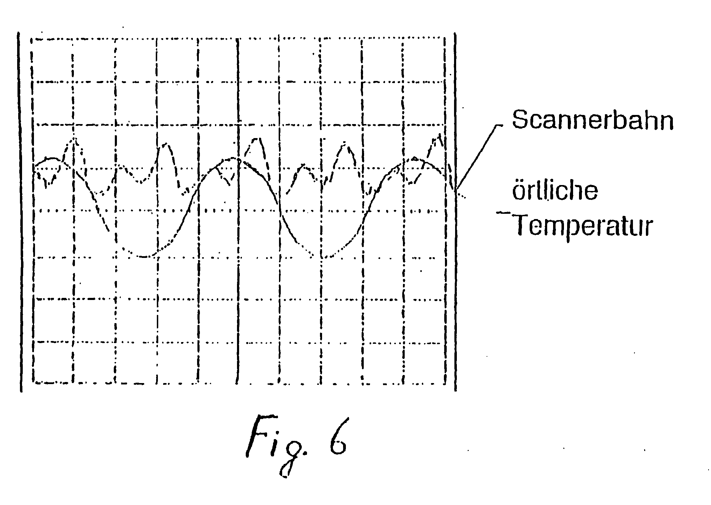

Das Diagramm gemäß Fig. 6 zeigt demgegenüber die ortsaufgelöste Temperaturmessung während des Härtens mit sinusförmiger Scannerbewegung ohne den Einsatz des Reglers, wobei sich in randnahen Zonen höhere Temperaturen und im mittleren Bereich niedrigere Temperaturen ergeben, wie aus dem Diagramm ablesbar ist.

Die Parameter sind hier dieselben wie in bezug auf Fig. 5 angegeben.

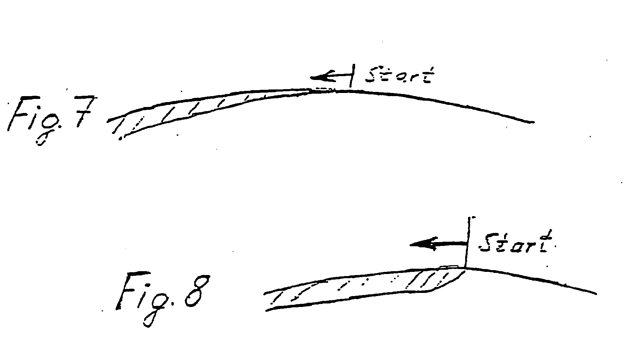

Die Fig. 7 und 8 geben schließlich schaubildartig das allmähliche Erreichen der geplanten Spurtiefe beim Anfahren der Vorschubbewegung während des Härtens ohne Temperaturregelung bzw. das schnelle Erreichen der geplanten Spurtiefe beim Anfahren der Vorschubbewegung während des Härtens mit Temperaturregelung gemäß der oben beschriebenen Teilstrategie zur Verfahrensoptimierung wieder.

### Liste der Bezugszeichen

- 1: Strahlquelle, Festkörperlaser
- 2: Leistungsstrahl, Strahlengang des Arbeitslasers
- 3: Linse
- 4: Härteoptik
- 5: teildurchlässiger Umlenkspiegel
- 6: Linse
- 7: Pfeil für Ablenkgeschwindigkeit
- 8: Schwingspiegel
- 9: Werkstückoberfläche
- 10: Antriebsmotor
- 11: Doppelpfeil für Vorschubrichtungen
- 12: Werkstück
- 13: Arbeitslaserstrahlfleck
- 14: Auftreffort
- 15: Temperaturstrahlung
- 16: Umlenkspiegel
- 17: Temperaturkontrolleinrichtung
- 18: Bandpaßfilter
- 19: Blende
- 20: Linse
- 21: Lochblende
- 22.: IR-Detektor
- 23: Doppelpfeil für Bewegung der Linse 20
- 24: Doppelpfeil für Bewegung der Lochblende 21
- 25: Ausgang der Temperaturkontrolleinrichtung
- 26: Eingang des Regelkreises 27
- 27: Regelkreis für Istgrößen
- 28: Regler
- 29: Ausgang des Regelkreises 27 für Istgrößen
- 30: Eingang des Regelkreises 31 für Stellgrößen
- 31: Regelkreis für Stellgrößen
- 32: Ausgang des Regelkreises 33 für Sollgrößen
- 33: Regelkreis für Sollgrößen
- 34: Eingang des Regelkreises 33 für Sollgrößen
- 35: Ausgang der Strahlquelle 1
- 36: Ausgang des Antriebsmotors 10
- 37: Ausgang des Antriebs 38 des Schwingspiegels 8
- 38: Antrieb des Schwingspiegels 8
- 39: Ausgang des Regelkreises 31 für Stellgrößen
- 40: Eingang der Strahlquelle 1
- 41: Eingang des Antriebsmotors 10
- 42: Eingang des Antriebs 38 des Schwingspiegels 8

## Patentansprüche

1. Verfahren zum Härten von Werkstückoberflächen mittels Strahlen, insbesondere mittels Laserstrahlen, bei dem eine laserstrahlformende Härteoptik (4) und die Werkstückoberfläche (9) relativ zueinander bewegt werden, der Auftreffort (14) des Arbeitslaserstrahlflecks (13) während des Härtens durch Ablenkbewegung von Strahlformungseinrichtungen der Härteoptik (4) quer zur Vorschubrichtung (11) oszilliert und die Werkstückoberflächentemperatur fortlaufend gemessen und ihre Verteilung längs der Vorschubrichtung geregelt wird,
**gekennzeichnet durch die Kombination der Merkmale, daß**
- die Temperaturstrahlung des quer zur Vorschubrichtung (11) oszillierenden Auftreffortes (14) des Arbeitslaserstrahlflecks (13) mittels teildurchlässiger Spiegel (5) kolinear zum Strahlengang des Arbeitslasers **durch** die Härteoptik (4) hindurch einer Temperaturkontrolleinrichtung (17) zugeführt wird, von der stets momentan die Temperatur im Auftreffort (14) des Arbeitslaserstrahlflecks (13) exakt erfaßt wird,
- die ermittelten Temperaturmeßdaten einem mit der Strahlquelle (1), der Strahlablenkung und der Vorschubbewegung gekoppelten Regler (28) eingegeben werden, in dem eine Temperaturverteilung quer zur Vorschubrichtung (11) ermittelt wird und über den eine darauf abgestimmte Verteilung der Laserstrahlenergie und eine angepaßte Steuerung der Ablenkbewegung der Strahlformungseinrichtungen der Härteoptik (4) und der Vorschubbewegung unter Berücksichtigung der Materialeigenschaften, der Einhärtetiefe, der Erwärmungs- und Abkühlungsdauer, der Werkstückgeometrie, der Auslenkbewegung, der Vorschubbewegung und der Bearbeitungszeit als bearbeitungsspezifische Vorgaben derart erfolgen, daß eine homogene Temperaturverteilung auf der Werkstückoberfläche (9) längs und quer zur Vorschubrichtung (11) erzeugt wird, und daß
- eine komplexe Regelung der Temperatur erfolgt, indem aus dem Temperaturverlauf eines vorausgegangenen Arbeitszyklusses eine Ablenkbewegung erzeugt wird, die **durch** die entsprechende Geschwindigkeit die geforderte Temperatur für den folgenden Arbeitszyklus einstellt, wobei zur Anpassung der Einwirkdauer des Strahls für jeden einzelnen Punkt bei hohen Temperaturen die Ablenkgeschwindigkeit abschnittsweise erhöht und bei niedrigen abschnittsweise gesenkt wird und wobei die Strahlablenkung und die Vorschubbewegung annähernd so gehalten werden, daß die Strahlquelle (1) immer an der Leistungsgrenze gehalten wird.

2. Verfahren nach Anspruch 1, **dadurch gekennzeichnet, daß** bekannte Abschnitte fehlender Werkstückoberflächen (Bohrungen oder Kanten am Werkstück) mit hoher Ablenkgeschwindigkeit übersprungen werden.

3. Verfahren zum Härten von Werkstückoberflächen mittels Strahlen, insbesondere mittels Laserstrahlen, bei dem eine laserstrahlformende Härteoptik (4) und die Werkstückoberfläche (9) relativ zueinander bewegt werden, der Auftreffort (14) des Arbeitslaserstrahlflecks (13) während des Härtens durch Ablenkbewegung von Strahlformungseinrichtungen der Härteoptik (4) quer zur Vorschubrichtung (11) oszilliert und die Werkstückoberflächentemperatur fortlaufend gemessen und ihre Verteilung längs der Vorschubrichtung (11) geregelt wird, indem die Temperaturstrahlung des quer zur Vorschubrichtung (11) oszillierenden Auftreffortes (14) des Arbeitslaserstrahlflecks (13) mittels teildurchlässiger Spiegel (5) kolinear zum Strahlengang des Arbeitslasers durch die Härteoptik (4) hindurch einer Temperaturkontrolleinrichtung (17) zugeführt wird, von der stets momentan die Temperatur im Auftreffort (14) des Arbeitslaserstrahlflecks (13) exakt erfaßt wird,
**gekennzeichnet durch** die Kombination der Merkmale, daß
- die ermittelten Temperaturmeßdaten einem mit der Strahlquelle (1), der Strahlablenkung und der Vorschubbewegung gekoppelten Regler (28) eingegeben werden, in dem eine Temperaturverteilung quer zur Vorschubrichtung (11) ermittelt wird und über den eine darauf abgestimmte Verteilung der Laserstrahlenergie und eine angepaßte Steuerung der Ablenkbewegung der Strahlformungseinrichtungen der Härteoptik (4) und der Vorschubbewegung unter-Berücksichtigung der Materialeigenschaften, der Einhärtetiefe, der Erwärmungs- und Abkühlungsdauer, der Werkstückgeometrie, der Auslenkbewegung, der Vorschubbewegung und der Bearbeitungszeit als bearbeitungsspezifische Vorgaben derart erfolgen, daß eine homogen Temperaturverteilung auf der Werkstückoberfläche (9) längs und quer zur Vorschubrichtung (11) erzeugt wird, und daß
- eine Proportionalregelung der Temperatur erfolgt, indem vom geforderten Temperatursignal das aktuelle subtrahiert und die Differenz mit einem Faktor X zur Steuerung der Strahlleistung multipliziert wird, wobei die Strahlablenkung periodisch sinusförmig und die Vorschubgeschwindigkeit konstant gehalten werden.

4. Verfahren nach Anspruch 1 bis 3, **dadurch gekennzeichnet, daß** in Vorschubrichtung die Temperatur der heißesten Stelle der vom Laser bestrahlten Werkstückoberflächenlinie zur Regelung des Laserleistungsniveaus aufgrund der ortsaufgelösten Temperaturmessung quer zur Vorschubrichtung genutzt wird.

5. Vorrichtung zur Durchführung des Verfahrens nach Anspruch 1 bis 4, mit einer regelbaren Strahlquelle (1), insbesondere einem Festkörperlaser, mit einer mindestens einen teildurchlässigen Spiegel (5) aufweisenden Härteoptik (4) mit einer strahlformenden Ablenkeinrichtung (8), von der der Arbeitslaserstrahlfleck (13) auf einer Werkstückoberfläche (9) quer zur Vorschubrichtung (11) oszillierend aufbringbar ist, mit einer Einrichtung zum Erzeugen einer relativen Vorschubbewegung von Härteoptik (4) und Werkstückoberfläche (9) und mit einer Temperaturkontrolleinrichtung (17), der durch den teildurchlässigen Spiegel (5) die unmittelbar vom Auftreffort (4) kommende Temperaturstrahlung (15) über die Ablenkeinrichtung (8) durch die Härteoptik (4) hindurch zuführbar ist und von der stets momentan die Temperatur am Auftreffort (14) des Arbeitslaserstrahls (13) auf der Werkstückoberfläche (9) quer zur Vorschubrichtung (11) meßbar ist,
**gekennzeichnet durch die Kombination der Merkmale, daß**
- der Ausgang (25) der Temperaturkontrolleinrichtung (17) mit dem Eingang (26) eines Istgrößen verarbeitenden Regelkreises (27) eines Reglers (28) verbunden ist, dem die Meßdaten der Temperaturverteilung quer zur Vorschubrichtung (11) zur Verarbeitung eingebbar sind und der mit dem Ausgang (35) der Strahlquelle (1), dem Ausgang (36) der Einrichtung (10) zum Erzeugen der relativen Vorschubbewegung und dem Ausgang (37) des Antriebs (38) der Ablenkeinrichtung (8) zur Aufnahme der Ist-Strahlleistung bzw. der Ist-Vorschubbewegung bzw. der Ist-Strahlablenkung verbunden ist,
- daß der den Istgrößen zugeordnete Regelkreis (27) des Reglers (28) ausgangsseitig mit dem Eingang (30) eines Stellgrößen erzeugenden Regelkreises (31) des Reglers (28) verbunden ist, der eingangsseitig zugleich mit dem Ausgang (32) eines Sollgrößen verarbeitenden Regelkreises (33) des Reglers (28) verbunden ist, dessen Eingang (34) Materialeigenschaften, die Einhärttiefe, die Erwärmungs- und Abkühlungsdauer, die Vorschubbewegung und die Bearbeitungszeit als bearbeitungsspezifischen Vorgaben (Bearbeitungsparameter) aufnimmt, und daß
- der Ausgang (39) des Stellgrößen erzeugenden Regelkreises (31) des Reglers (28) mit dem Eingang (40) der Strahlquelle (1), dem Eingang (41) der Einrichtung (10) zum Erzeugen der relativen Vorschubbewegung (11) und dem Eingang (42) des Antriebs (38) der Ablenkeinrichtung (8) zur Steuerung einer an einen homogenen Temperaturverlauf angepaßten Verteilung der Laserstrahlenergie bzw. angepaßten Strahlablenkung verbunden ist.

6. Vorrichtung nach Anspruch 5, **dadurch gekennzeichnet, daß** die Temperaturkontrolleinrichtung (17) einen dem teildurchlässigen Spiegel (5) der Härteoptik (4) in Richtung des Verlaufs der Temperaturstrahlung (15) nachgeordneten Umlenkspiegel (16) aufweist, von dem die Temperaturstrahlung (15) durch eine Reihenanordnung eines Bandpaßfilters (18), einer Blende (19) und einer Linse (20) lenkbar ist, von der die Temperaturstrahlung (15) auf eine nachgeordnete Lochblende (21) fokussierbar ist, der ein IR-Detektor (22) in Strahlrichtung nachgeordnet ist, von dem stets die Temperatur im Auftreffort (14) des quer zur Vorschubrichtung (11) oszillerenden Arbeitslasersstrahlffecks (13) exakt, meßbar ist.

7. Vorrichtung nach Anspruch 5 und 6, **dadurch gekennzeichnet, daß** die Ablenkeinrichtung (8) der Härteoptik (4) ein Schwingspiegel ist.

8. Vorrichtung nach Anspruch 5 und 6, **dadurch gekennzeichnet, daß** die Ablenkeinrichtung (8) der Härteoptik (4) ein Scannerspiegel ist.

## Claims

1. Method of hardening the surface of a work-piece using beams, particularly laser beams, with which a laser beam-forming hardening optics (4) and the surface of a work-piece are relatively moved towards one another, the point of impact (14) of the work laser beam spot (13) oscillates transversely to the advance direction (11) during the hardening by the deviation movement of beam formation devices of the hardening optics (4) and the surface temperature of the work-piece is constantly measured and its distribution regulated along the advance direction **characterized by the combination of the features that**
- the thermal radiation of the point of impact of the work laser beam spot which is oscillating transversely to the advance direction is supplied by means of partly translucent mirrors (5) co-linearly to the beam path of the work laser through the hardening optics (4) to a temperature control device (17) by which the temperature of the work laser beam spot (13) is always instantaneously exactly measured in the impact point (14),
- the determined temperature measuring data are entered in a control unit (28) which is coupled with the beam source, the beam deviation and advance movement in which a temperature distribution is determined transversely to the advance direction (11) and by means of which a distribution of the laser beam energy adjusted to it and an adapted control of the deviation movement of the hardening optics' (4) beam formation devices and of the advance movement taking into account processing-specific standards takes place in such a manner that a homogenous temperature distribution is realised on the surface of a work-piece longitudinally and transversely to the advance direction, and that
- complex control of the temperature takes place by means of producing a deviation movement from the march of temperature of a previous working cycle which sets the required temperature for the following working cycle by the relevant speed whereby the deviation speed is increased in sections for the adaptation of the action time of the beam for each individual point at high temperatures and lowered in sections at low ones and whereby the beam deviation and the advance movement are approximately maintained in such a manner that the beam source is always maintained at the performance limit.

2. Method according to claim in that known sections of missing work-piece surface (borings or edges at the work-piece) are missed out with high deviation speed.

3. Method of hardening the surface of a work-piece using beams, particularly laser beams, with a laser beam-forming hardening optics (4) and the surface of a work-piece are relatively moved towards one another, the point of impact (14) of the work laser beam spot (13) oscillates transversely to the advance direction (11) during the hardening by the deviation movement of beam formation devices of the hardening optics (4) and the surface temperature of the work-piece is constantly measured and its distribution regulated along the advance direction by supplying the thermal radiation of the point of impact of the work laser beam spot which is oscillating transversely to the advance direction by means of partly translucent mirrors (5) co-linearly to the beam path of the work laser through the hardening optics (4) to a temperature control device (17) by which the temperature of the work laser beam spot (13) is always instantaneously exactly measured in the impact point (14) **characterized by** the combination of the features that
- the determined temperature measuring data are entered in a control unit (28) which is coupled with the beam source, the beam deviation and advance movement in which a temperature distribution is determined transversely to the advance direction (11) and by means of which a distribution of the laser beam energy adjusted to it and an adapted control of the deviation movement of the hardening optics'(4) beam formation devices and of the advance movement taking into account processing-specific standards takes place in such a manner that a homogenous temperature distribution is realised on the surface of a work-piece longitudinally and transversely to the advance direction, and that proportional control of the temperature takes place by subtracting the actual from the requires temperature signal and multiplying the difference with the factor X for the control of the beam performance whereby the beam deviation is maintained periodically sinusoidal and the advance speed is kept constant.

4. Method according to claims 1 to 3 **characterized in that** in the advance direction, the temperature of the hottesst spot of the work-piece surface line exposed to laser radiation is used for controlling the laser performance level transversely to the advance direction by reason of the temperature measurement at individual points.

5. Device for executing this procedure according to claims 1 to 4, with a controllable beam source (1), especially a solid body laser, with a hardening optics provided with an least one partly translucent mirror (5) and with a beam-forming deviation device (8) from which the work laser beam spot (13) can be applied to a work-piece surface (9) transversely to the advance device (11) in an oscillating manner, with a unit for the creation of a relative advance movement of hardening optics (4) and work-piece surface (9) and with a temperature control device (17) to which through the partly translucent mirror (5) the thermal radiation (15) that comes directly from the point of impact (14) can be supplied via the deviation device (8) through the hardening optics (4) and from which the temperature at the point of impact (14) of the work laser beam (13) on the work-piece surface (9) can always instantaneously be measured transversely to the advance direction (11) **characterized by the combination of the features**
- that the exit (25) of the temperature control device (17) is connected with an entrance (26) of a control loop (27) processing actual dimensions of a control unit (28) into which the measuring date of the temperature distribution can be entered for processing transversely to the advance direction (11) and which is connected with the exit (35) of the beam source (1), the exit (36) of the device (10) for the generation of the relative advance movement and the exit (37) of the actuation (38) of the deviation device (8) for the registration of the actual beam performance or the actual advance movement or the actual beam deviation,
- that the control unit's (28) control loop (27) allocated to the actual dimensions is on the side of the exit connected with the entrance (30) of the control unit's (28) control loop (31) which is producing correcting variables and which is at same time connected on the entrance-side with the exit (32) of a control loop (33) of the control unit (28) which is processing desired sizes and the entrance (34) of which registers processing-specific standards (processing parameters) and
- that the exit (39) of the control unit's (28) control loop (31) which is producing the correcting variables is connected with the entrance (40) of the beam source (1), the entrance (41) of the device (10) for the generation of the relative advance movement (11) and the entrance (41) of the deviation device's (8) actuation (38) for the control of a distribution of the laser beam energy adapted to a homogenous temperature march or the adapted advance movement or the adapted beam deviation.

6. Device according to claim 5 in that the temperature control device (17) has a tilted mirror (16) which is placed behind the partly translucent mirror (5) of the hardening optics (4) in the direction of the march of the thermal radiation (15) from which tilted mirror (16) the thermal radiation (15) can be directed by means of a series arrangement of the band-pass filter (18) of a screen (19) and a lens (20) from which the thermal radiation (15) can be focussed onto an aperture (21) placed behind it which is followed by an IR-detector (22) in beam-direction by which the temperature of the work laser beam spot (13) which is transversely oscillating to the advance direction (11) can always be exactly measured in the point of impact (13).

7. Device according to claims 5 and 6 in that the deviation device (8) of the hardening optics (4) is a swing mirror.

8. Device according to claims 5 and 6 in that the deviation device (8) of the hardening optics (4) is a scanner mirror.

## Revendications

1. Procédé de durcissement de la surface d'une pièce à travailler au moyen d'un faisceau, en particulier un faisceau laser lors duquel une optique de durcissement (4) formant un faisceau laser et la surface de la pièce à travailler sont déplacées relativement l'une par rapport à l'autre, le point d'impact (14) du spot de laser de travail (13) oscille transversalement à la direction d'avance (11) durant le durcissement moyennant un mouvement de déviation de dispositifs de formation de faisceau de l'optique de durcissement (4) et la température de la surface de la pièce à travailler est mesurée en permanence et sa répartition le long de la direction d'avance est réglée, **caractérisé par le combinaison** que
- à travers l'optique de durcissement (4) la radiation de température du point d'impact oscillant transversalement à la direction d'avance du spot de laser de travail est, moyennant des miroirs partiellement transparents (5), amenée co-linéairement au trajet du faisceau du laser de travail vers un dispositif de contrôle de température (17) mesurant exactement à tout moment la température au point d'impact (14) du spot de laser de travail (13), que
- les données de température mesurées sont introduites dans un régulateur (28) accouplé à la source de radiation, à la déviation de radiation et au mouvement d'avance, permettant de déterminer une répartition de température transversalement à la direction d'avance (11) et à réaliser une répartition accordée de l'énergie laser et une commande adaptée du mouvement de déviation des dispositifs de formation de faisceau de l'optique de durcissement (4) et du mouvement d'avance tout en tenant compte des normes spécifiques de traitement de manière que sur la surface de la pièce à travailler une répartition de température homogène est réalisée en sens longitudinal et transversal à la direction d'avance et
- qu'un réglage complexe de la température est effectué en réalisant à partir du cycle de température d'un cycle de travail précédent un mouvement de déviation réglant moyennant la vitesse correspondante la température exigée pour le cycle de travail suivant en augmentant par sections la vitesse de déviation lors de températures élevées et en la diminuant par sections lors de températures basses en vue de l'adaptation de la durée d'exposition du faisceau pour chaque point isolé, la déviation de radiation et le mouvement d'avance étant chaque point isolé, la déviation de radiation et le mouvement d'avance étant approximativement maintenus de sorte que la source de radiation soit toujours maintenue à la limite de puissance.

2. Procédé suivant revendication 1, **caractérisé par le fait que** des secteurs connus d'absence de surface de la pièce à travailler (forures ou arêtes de la pièce à travailler) sont sautés à haute vitesse de déviation.

3. Procédé de durcissement de la surface d'une pièce à travailler au moyen dùn faisceau, en particulier un faisceau laser lors duquel une optique de durcissement (4) formant un faisceau laser et la surface de la pièce à travailler sont déplacées relativement l'une pa rapport à l'autre, le point d'impact (14) du spot de laser de travail (13) oscille transversalement à la direction d'avance (11) durant le durcissement moyennant un mouvement de déviation de dispositifs de formation de faisceau de l'optique de durcissement (4) et la température de la surface de la pièce à travailler est mesurée en permanence et sa répartition le long de la direction d'avance est réglée, comme á travers l'optique de durcissment (4) la radiation de température du point d'impact oscillant transversalement á la direction d'avance du spot de laser de travail est, moyennant des miroirs partiellement transparents (5), amenée colinéairement au trajet du faisceau du laser de travail vers un dispositif de contrôle de température (17) mesurant exactement à tout moment la température au point d'impact (14) du spot de laser de travail (13), **caractérisé par le combinaison** que
- les données de température mesurées sont introduites dans un régulateur (28) accouplé à la source de radiation, à la déviation de radiation et au mouvement d'avance, permettant de déterminer une répartition de température transversalement à la direction d'avance (11) et à réaliser une répartition accordée de l'énergie laser et une commande adaptée du mouvement de déviation des dispositifs de formation de faisceau de l'optique de durcissement (4) et du mouvement d'avance tout en tenant compte des normes spécifiques de traitement de manière que sur la surface de la pièce à travailler une répartition de température homogène est réalisée en sens longitudinal et transversal à la direction d'avance, et que
- la température est réglée moyennant un réglage proportionnel en soustrayant du signal de température exigé le signal actuel et en multipliant la différence par un facteur X pour la commande de la puissance de radiation, la déviation de radiation étant maintenue périodiquement sinusoïdale et la vitesse d'avance étant maintenue constante.

4. Procédé suivant revendications 1 à 3, **caractérisé par le fait qu'**en direction d'avance la température du plus chaud point de la ligne superficielle de la pièce à travailler exposée au faisceau laser est utilisée pour le réglage du niveau de puissance laser en raison de la mesure de température par points transversale à la direction d'avance.

5. Dispositif de réalisation du procédé suivant revendications 1 à 3 avec une source de radiation réglable (1), tout particulièrement un laser solide, avec une optique de durcissement (4) avec un dispositif de déviation formant des faisceaux (8) permettant d'appliquer de manière oscillante sur une surface d'une pièce à travailler le spot de laser de travail (13) transversalement à la direction d'avance (11), avec un dispositif servant à réaliser un mouvement relatif d'avance de l'optique de durcissement (4) et de la surface de la pièce à travailler et avec un dispositifs de contrôle de température (17) dans lequel au moyen du miroir partiellement transparent (5) permettant d'amener la radiation de température (15) parvenant directement du point d'impact (14) pardessus le dispositif de déviation (8) à travers l'optique de durcissement (4) et vers lequelle permettant de mesurer à tout moment la température au point d'impact (14) du spot de laser de travail (13) sur la face de la pièce à travailler transversalement à la direction d'avance (11), **caractérisé par la combinaison que**
- la sortie (25) du dispositif de contrôle de température (17) est reliée à une entrée (26) d'un circuit de réglage (27) traitant les grandeurs effectives d'un régulateur (28) dans lequel peuvent être introduites pour traitement les données mesurées de la répartition de température transversale à la direction d'avance (11) et qui est relié à la sortie (35) de la source de radiation (1), à la sortie (36) du dispositif (10) de réalisation du mouvement d'avance relatif et à la sortie (37) de la commande (38) du dispositif de déviation (8) servant à recevoir la puissance de radiation effective resp. le mouvement d'avance effectif resp. la déviation de radiation effective,
- que la sortie du circuit de réglage (27) affecté aux grandeurs effectives du régulateur (28) est reliée à l'entrée (30) d'un circuit de réglage (31) réalisant des grandeurs de réglage du régulateur (28) dont l'entrée est en même temps reliée à la sortie (32) d'un circuit de réglage (33) traitant les grandeurs nominales du régulateur (28) dont l'entrée (34) enregistre des normes spécifiques de traitement (paramètres de traitement) et
- que la sortie (39) du circuit de réglage (31) réalisant des grandeurs de réglage du régulateur (28) est reliée à l'entrée (40) de la source de radiation (1), à l'entrée (41) du dispositif (10) de réalisation du mouvement d'avance relatif (11) et à l'entrée (41) de la commande (38) du dispositif de déviation (8) pour la commande d'une distribution de l'énergie du faisceau laser adaptée à un cycle de température homogène resp. d'un mouvement d'avance adaptée d'une déviation de radiation adaptée.

6. Dispositif suivant revendication 5, **caractérisé par le fait que** le dispositif de contrôle de température (17) présente un miroir de déviation (16) disposé derrière le miroir partiellement transparent (5) de l'optique de durcissement (4) en direction du cours de la radiation de température (15), ce miroir de déviation permettant de contrôler la radiation de température (15) moyennant une disposition en ligne d'un filtre de bande (18), d'un écran (19) et d'une lentille (20) permettant de concentrer la radiation de température (15) sur un diaphragme à trou (21) placé en amont derrière lequel est placé en direction de radiation un détecteur infrarouge (22) permettant de mesurer exactement en continu la température dans le point d'impact (14) du spot de laser de travail (13) oscillant transversalement à la direction d'avance (11).

7. Dispositif suivant revendications (13) 5 et 6, **caractérisé par le fait que** le dispositif de déviation (8) de l'optique de durcissement (4) est un miroir oscillant.

8. Dispositif suivant revendications 5 et 6, **caractérisé par le fait que** le dispositif de déviation (8) de l'optique de durcissement (4) est un miroir de balayage.
